# EUROPEAN PATENT SPECIFICATION

(11) **EP 0 683 197 B1**
(45) Date of publication and mention of the grant of the patent: **21.07.1999**
(21) Application number: 95201324.1
(22) Date of filing: 19.05.1995
(51) Int. Cl.: C08J 7/14

(54) **Method for providing a polymeric surface with carboxyl groups, the surface and a product with such a surface**
Verfahren zum Versehen einer Polymeroberfläche mit Carboxylgruppen, die Oberfläche, und ein Produkt mit einer solchen Oberfläche
Méthode pour pourvoir une surface de polymère avec des groupes carboxyle, cette surface, et un produit ayant ladite surface

(30) Priority: 19.05.1994 NL 9400826
(43) Date of publication of application: 22.11.1995
(73) Proprietor: CORDIS EUROPA N.V., NL-9301 LJ Roden (NL)
(72) Inventor: Lens, Jan-Pleun, NL-7521 HN Enschede (NL); Terlingen, Johannes Gijsbertus Antonius, NL-7558 CB Hengelo (NL); Fijen, Jan, NL-7552 GD Hengelo (NL)
(74) Representative: Prins, Hendrik Willem

(56) References cited:
- EP-A- 0 424 873
- DATABASE WPI Derwent Publications Ltd., London, GB; AN 82-04670E[03] & JP-A-56 157 437 (SUMITOMO ELEC. IND. KK.) , 7 May 1980
- DATABASE WPI Derwent Publications Ltd., London, GB; AN 84-266834[43] & JP-A-59 163 473 (UNITIKA KK.) , 14 September 1984
- DATABASE WPI Derwent Publications Ltd., London, GB; AN 93-139709[17] & JP-A-05 076 734 (NITTO DENKO CORP.) , 30 March 1993
- JOURNAL OF BIOMATERIAL SCIENCE. POLYMER EDITION, vol. 4, no. 1, 1992 pages 31-33, TERLINGEN J.G.A. ET AL 'Immobilisation of Surface Active Compounds on Polymer Supports using a Gas Discharge Process'
- JOURNAL OF APPLIED POLYMER SCIENCE, vol. 50, 1993 pages 1529-1539, TERLINGEN J.G.A. 'Effect of Glow Discharge Treatment of Poly(Acrylic Acid) Preadsorbed onto Poly(ethylene)'

## Description

The present invention relates to a method for providing a polymeric surface with carboxyl groups, to a surface which is provided in this manner with carboxyl groups, and to a product provided with such a surface which is suitable for exposure to blood.

Using conventional chemical processes it often not possible to selectively link ionogenic groups to a hydrophobe plastic substrate surface.

Terlingen J.G.A. et al, (Journal of Colloid and Interface Science, 155, 55-65 (1993)), describe a method for immobilizing sulphate groups on polypropylene.

A similar method for immobilizing carboxyl groups on the plastic surface appears however not to work (Terlingen J.G.A. et al, Journal of Applied Polymer Science, 50, 1529-1539 (1993)).

The present invention is based on the insight that when a plasma treatment is performed on a polymeric surface on which compounds with carboxyl groups are adsorbed, these carboxyl groups are not sufficiently resistant to the etching effect of the plasma treatment. It has been found from further research, however, that by making use not of compounds with carboxyl groups but of compounds with functional groups which can be converted after the plasma treatment into carboxyl groups which have a better resistance to the etching effect of the plasma treatment, the surface in question can thus be provided with carboxyl groups via plasma treatment. After immobilization with the plasma treatment the functional groups can be converted into a carboxyl group without the covalent bond between the compound and the surface disappearing.

The present invention therefore relates to a method for providing a polymeric surface with carboxyl groups, comprising the steps of successively:
(i) applying to the surface a compound with at least one functional group which can be converted into a carboxyl group;
(ii) treating the surface with a plasma to immobilize the compound; and
(iii) converting the functional group into a carboxyl group.

Any type of functional group can in principle be applied, assuming that the functional group has a better resistance to the etching action of the plasma treatment, the compound is immobilized by the plasma treatment by means of a covalent bonding to the polymeric surface, and the functional group can be substantially fully converted into a carboxyl group. Functional groups meeting these requirements comprise a carboxylate group, an aldehyde group and an alcohol group.

The compounds with such a functional group can be applied to the polymeric surface in accordance with any known method, for instance a mechanical method comprising spinning a liquid onto the plastic surface or applying a film to the plastic surface, in both cases followed by evaporation of the solvent. Another method for applying the compound provided with a functional group to the plastic surface comprises adsorbing the compound from a liquid phase.

In the case the surface is a hydrophobe surface, it is further recommended that the compound containing the functional group is a surfactant. An advantageous embodiment of the surfactant is a fatty acid salt such as alkali and earth alkali metal salts of fatty acids, the corresponding alcohols and aldehydes. An example is the sodium salt of undecilene acid.

For particular applications of the surface (for instance exposure to blood), it can be advantageous that the surface is not only provided with carboxyl groups but also with SO₃⁻ groups. Under these conditions it is further recommended that a compound containing at least one SO₃⁻ group is applied to the surface. According to an advantageous embodiment the compounds with the functional groups and the compounds with the SO₃⁻ groups can be adsorbed simultaneously.

As compounds containing SO₃⁻ groups can be used organic sulphate (-C-O-SO₃⁻) groups, sulphamate (-CNH-SO₃⁻) groups and sulphonate (-C-SO₃⁻) groups. Suitable organic compounds with sulphate and/or sulphonate groups are generally known. Compounds with sulphamate groups can be prepared according to the Warner method (Warner D.T. et al, J. Org. Chem. 23, 1133-1135 (1958)).

These compounds containing SO₃⁻ groups are preferably in the form of a surfactant, such as an analog of the corresponding fatty acid.

In order to avoid compounds being adsorbed on the surface but not immobilized by means of the plasma treatment, it is further recommended that the plastic surface is subjected after the plasma treatment to a washing treatment. Adsorbed but not immobilized compounds are thus removed from the surface.

Another aspect of the present invention relates to a polymeric surface provided with carboxyl groups, and further with sulphate groups.

Further, the present invention relates to a product provided with such a polymeric surface which is suitable for exposure to blood. It has in any case been found that a surface provided with both sulphate functional and carboxyl functional groups can result in an improvement of the compatibility of such products with blood.

Finally, the invention relates to a method for covalently binding a molecule comprising a carboxyl reactive functional group to a polymeric surface comprising the steps of:
(i) applying to the surface a compound with at least one functional group which can be converted into a carboxyl group;
(ii) treating the surface with a plasma to immobilize the compound; and
(iii) converting the functional group into a carboxyl group; and
(iv) reacting the molecule with surface immobilized compound.

Accordingly, different types of molecules having a carboxyl reactive functional group, such as amine groups, like amino acids, peptides and proteins can be immobilized covalently on the surface.

As already mentioned a large number of proteins can be immobilized on carboxylic acid groups containing polymer surfaces. Another example is the coupling of basic Fibroblast Growth Factor (bFGF) to carboxylic acid groups containing polyethylene surfaces.

Plastic surfaces which can be provided with carboxyl and optionally sulphate groups according to the invention comprise polyolefins such as polyethylene, polypropylene, polyesters, polystyrene, polyethers, polyamides, polyurethanes, polysiloxanes, polyacetates, polyacrylates.

The compounds with a functional group and/or with an SO₃⁻ group to be used comprise all types of compounds which can be adsorbed on such surfaces from the liquid or gas phase. These compounds comprise alkyl chains with 2 to 30 carbon atoms, whereof the chain can be straight, branched, saturated, mono- or poly-unsaturated and/or interrupted by one or more heterogeneous atoms such as nitrogen, oxygen, sulphur, and which chain can be substituted with one or more substituents such as hydroxyl, oxo, acyloxy, alkoxy, amino, nitro, cyano, halogeno, sulphydryl, assuming that the adsorption properties and stability properties are not adversely affected during plasma treatment.

Very suitable compounds are surfactants such as fatty acid salts of saturated or unsaturated fatty acids such as the alkali and earth alkali metal salts of undecilene acid and lauryl acid, wherein it is noted that the use of an unsaturated fatty acid salt produces a higher immobilization efficiency. In addition the corresponding aldehydes and alcohols.

Use is made for the plasma treatment of a standard plasma apparatus as described for instance in Terlingen J.G.A. et al, while use is made of a gas such as argon and/or hydrogen.

The adsorption treatment with the compound containing the functional group and optionally SO₃⁻ group comprises immersing the plastic surface in a solution containing such a compound. After a time (for instance up to 5 hours) the plastic surface is removed and dried under vacuum at room temperature. The solution of the compound or compounds is chosen such that after drying these compounds remain adsorbed on the plastic surface.

After the plasma treatment the plastic surface is immersed in water, for instance for up to 5 hours, then rinsed twice with water and dried under vacuum at room temperature, in order to remove non-immobilized compounds from the surface.

The presence on the surface of immobilized carboxyl groups can be ascertained using X-ray photoelectron-spectroscopy (XPS) after the carboxyl group has been converted into a carboxylate group or has been substituted with a substituent containing an ester-linked fluorine (treatment with 2,2,2-trifluoroethanol (TFE)).

The invention will be further elucidated hereinbelow with reference to a number of embodiments.

### Example 1

A polyethylene film (thickness 0.2 mm) was immersed in a watery 0.29 M solution of the sodium salt of undecilene acid. After 1 hour the plastic film was removed and dried under vacuum at room temperature. The plastic film was subsequently treated with plasma (45 W, 0.07 mbar, 0.5-60 sec.). Argon was used as gas.

After the plasma treatment the film was immersed in water for 1 hour at room temperature, subsequently washed twice with water and dried under vacuum at room temperature.

To detect the carboxyl groups which are immobilized on the polyethylene film surface the polyethylene film was treated with gas phase TFE, whereafter the quantity of fluorine and oxygen was determined using XPS. With an argon plasma treatment of 5 seconds the quantity of fluorine amounted to 4.9 atom% and the quantity of oxygen to 5.9 atom%. 55% of the oxygen is therefore present as carboxyl groups, which corresponds to an immobilization efficiency of 29%. With an argon plasma treatment of a polyethylene film surface onto which no sodium salt of undecilene acid was adsorbed the quantity of fluorine amounted to 1.2 atom% and the quantity of oxygen to 9.4 atom%. 9% of the oxygen is therefore present as carboxyl groups.

### Example 2

The experiment of example 1 was repeated, except that instead of the sodium salt of undecilene acid use was made of polyacrylic acid. An additional quantity of carboxyl groups as compared to a polyethylene film onto which no polyacrylic acid was adsorbed could not be determined after plasma treatment.

### Example 3

For comparison with example 1, polyethylene films which were adsorbed with the sodium salt of undecilene acid or the sodium salt of dodecane acid were treated with an argon plasma.

After a treatment time of 20 sec. 9.8% of the total amount of oxygen was situated on the surface of the polyethylene film treated with the sodium salt of dodecane acid and had the form of carboxylate groups. This corresponds with an immobilization efficiency of 2%.

In the case the polyethylene films were treated (5 sec.) with the sodium salt of undecilene acid, 55% of the total amount of oxygen was situated on the surface in the form of carboxylate groups, which corresponds with an immobilization efficiency of 29%.

### Example 4

Sodium salt of undecilene acid and sodium dodecylsulphate were adsorbed on polyethylene films by immersing these films in a watery solution containing undecilene acid and sodium dodecylsulphate in a ratio of 1:1. After an adsorption time of 5 min. the films were removed and dried. The films were treated with an argon plasma (45W; 0.07 mbar) and washed with water whereafter a reaction with gas phase TFE was performed. After a plasma treatment time of 2 sec. 7.8 atom% O, 0.3 atom% S and 2.3 atom% F were measured on the surface of the films using XPS. The presence of sulphur on the polyethylene surface indicates immobilization of adsorbed sodium dodecylsulphate. If all sulphur is present in the form of sulphate groups, 29% of the oxygen is then present as sulphate groups and this results in an immobilization efficiency of 15% for sodium dodecylsulphate.

The presence of fluorine on the polyethylene surface indicates immobilization of adsorbed sodium salt of undecilene acid. 20% of the oxygen is thus present as carboxyl groups; an immobilization efficiency of the sodium salt of undecilene acid of 31%.

### Example 5

As an example the covalent coupling of albumin-heparin (alb-hep) conjugates to polystyrene surfaces onto which carboxylic acid groups were introduced according to the invention will be given.

¹⁴C labelled alb-hep conjugates were covalently bound to the carboxylic acid groups containing polystyrene surfaces using N-(3-dimethylaminopropyl)-N'-ethylcarbodiimide (EDC) in the presence of N-hydroxysuccinimide (NHS) as a coupling reagent. After washing extensively with PBS and phosphate buffers (pH 3.5 and 10.5) the samples were placed in a 3% SDS solution for at least 18 hours. The surfaces were dipped dry and the surface concentration of alb-hep conjugates was determined by measuring the radioactivity of the samples. As a control modified PS surfaces were placed in an alb-hep conjugates solution without the addition of EDC and NHS.

In the absence of EDC and NHS alb-hep conjugates are physically adsorbed onto the modified PS surfaces (surface concentration alb-hep conjugates = 0.29±0.01 µg/cm², n=3). The remaining part of the initial adsorbed amount of alb-hep conjugates is irreversible adsorbed onto the surface.

Alb-hep conjugates that are immobilized in the presence of EDC and NHS on the modified polystyrene surfaces (0.30±0.03 µg/cm², n=3) cannot be desorbed by SDS (surface concentration alb-hep conjugates after SDS incubation = 0.31±0.02 µg/cm², n=3). From these results it can be concluded that the alb-hep conjugates are covalently bonded to the carboxylic acid groups containing PS surface.

## Claims

1. Method for providing a polymeric surface with carboxyl groups, comprising the steps of:
(i) applying to the surface a compound with at least one functional group which can be converted into a carboxyl group;
(ii) treating the surface with a plasma to immobilize the compound; and
(iii) converting the functional group into a carboxyl group.

2. Method as claimed in claim 1, wherein the functional group which can be converted into a carboxyl group comprises a carboxylate group, an aldehyde group or an alcohol group.

3. Method as claimed in claims 1-2, wherein the compound with a functional group which can be converted into a carboxyl group is a surfactant.

4. Method as claimed in claim 3, wherein the surfactant is a fatty acid salt.

5. Method as claimed in claims 1-4, wherein a compound containing at least one SO₃⁻ group is immobilized on the surface.

6. Method as claimed in claim 5, wherein the compound containing the SO₃⁻ group is a surfactant.

7. Method as claimed in claim 5 or 6, wherein the compound with a functional group which can be converted into a carboxyl group and the compound containing an SO₃⁻ group are simultaneously or successively immobilized on the surface.

8. Method as claimed in claims 1-7, wherein the surface is subjected after the plasma treatment to a washing treatment.

9. Method as claimed in claims 1-8, wherein the surface is a plastic surface.

10. Polymeric Surface provided with carboxyl groups and sulphate groups as according to the method of claims 5-7.

11. Product with a surface for exposing to blood, wherein the surface is a surface as claimed in claim 9.

12. Method for covalently binding a molecule comprising a carboxyl reactive functional group to a polymeric surface comprising the steps of:
(i) applying to the surface a compound with at least one functional group which can be converted into a carboxyl group;
(ii) treating the surface with a plasma to immobilize the compound; and
(iii) converting the functional group into a carboxyl group; and
(iv) reacting the molecule with surface immobilized compound.

## Patentansprüche

1. Verfahren zum Versehen einer Polymeroberfläche mit Carboxylgruppen, umfassend die Schritte:
(i) Auftragen einer Verbindung mit mindestens einer funktionellen Gruppe, welche in eine Carboxylgruppe umgewandelt werden kann, auf die Oberfläche;
(ii) Behandeln der Oberfläche mit einem Plasma, um die Verbindung festzusetzen;
(iii) - Überführen der funktionellen Gruppe in eine Carboxylgruppe.

2. Verfahren gemäß Anspruch 1, worin die funktionelle Gruppe, die in eine Carboxylgruppe überführt werden kann, eine Carboxylatgruppe, eine Aldehydgruppe oder einen alkoholischen Rest umfaßt.

3. Verfahren gemäß Ansprüchen 1-2, worin die Verbindung mit einer funktionellen Gruppe, welche in eine Carboxylgruppe umgewandelt werden kann, ein oberflächenaktiver Stoff ist.

4. Verfahren gemäß Anspruch 3, worin der oberflächenaktive Stoff ein Fettsäuresalz ist.

5. Verfahren gemäß Ansprüchen 1-4, worin eine Verbindung, welche mindestens eine SO₃⁻-Gruppe enthält, auf der Oberfläche festgesetzt wird.

6. Verfahren gemäß Anspruch 5, worin die Verbindung , welche die SO₃⁻-Gruppe enthält, ein oberflächenaktiver Stoff ist.

7. Verfahren gemäß Anspruch 5 oder 6, worin die Verbindung mit einer funktionellen Gruppe, die in eine Carboxylgruppe umgewandelt werden kann, und die Verbindung, welche eine SO₃⁻-Gruppe enthält, gleichzeitig oder nacheinander auf der Oberfläche festgesetzt werden.

8. Verfahren gemäß Ansprüchen 1-7, worin die Oberfläche nach der Plasma-Behandlung einer Wasch-Behandlung ausgesetzt wird.

9. Verfahren gemäß Ansprüchen 1-8, worin die Oberfläche eine Plastikoberfläche ist.

10. Polymeroberfläche, versehen mit Carboxylgruppen und Sulfatgruppen gemäß dem Verfahren von Ansprüchen 5-7.

11. Produkt mit einer Oberfläche zur Blutexposition, worin die Oberfläche eine Oberfläche gemäß Anspruch 9 ist.

12. Verfahren zur kovalenten Bindung eines Moleküls, umfassend einen Carboxyl-reaktiven funktionellen Gruppe an eine Polymeroberfläche, umfassend die Schritte:
(i) Auftragen einer Verbindung mit mindestens einer funktionellen Gruppe, welche in eine Carboxylgruppe umgewandelt werden kann, auf die Oberfläche;
(ii) Behandeln der Oberfläche mit einem Plasma, um die Verbindung festzusetzen;
(iii) Überführen des funktionellen Rests in eine Carboxylgruppe; und
(iv) Umsetzen des Moleküls mit der auf der Oberfläche festgesetzten Verbindung.

## Revendications

1. Procédé pour conférer à une surface polymère des groupes carboxyliques, comprenant les étapes consistant à:
(i) appliquer sur la surface un composé possédant au moins un groupe fonctionnel qui peut être converti en un groupe carboxylique;
(ii) traiter la surface avec un plasma pour immobiliser le composé; et
(iii) convertir le groupe fonctionnel en un groupe carboxylique.

2. Procédé tel que revendiqué dans la revendication 1, dans lequel le groupe fonctionnel qui peut être converti en un groupe carboxylique comprend un groupe carboxylate, un groupe aldéhyde, ou un groupe alcool.

3. Procédé tel que revendiqué dans les revendications 1 et 2, dans lequel le composé possédant un groupe fonctionnel qui peut être converti en un groupe carboxylique est un tensioactif.

4. Procédé tel que revendiqué dans la revendication 3, dans lequel le tensioactif est un sel d'un acide gras.

5. Procédé tel que revendiqué dans les revendications 1 à 4, dans lequel un composé contenant au moins un groupe SO₃⁻ est immobilisé sur la surface.

6. Procédé tel que revendiqué dans la revendication 5, dans lequel le composé contenant le groupe SO₃⁻ est un tensioactif.

7. Procédé tel que revendiqué dans la revendication 5 ou 6, dans lequel le composé ayant un groupe fonctionnel qui peut être converti en un groupe carboxylique et le composé contenant un groupe SO₃⁻ sont immobilisés sur la surface simultanément ou l'un après l'autre.

8. Procédé tel que revendiqué dans les revendications 1 à 7, dans lequel la surface est soumise, après traitement au plasma, à un traitement de lavage.

9. Procédé tel que revendiqué dans les revendications 1 à 8, dans lequel la surface est une surface en plastique.

10. Surface polymère dotée de groupes carboxyliques et de groupes sulfate conformément aux procédés des revendications 5 à 7.

11. Produit possédant une surface destinée à être exposée à du sang, dans lequel la surface est une surface telle que revendiquée dans la revendication 9.

12. Procédé permettant de fixer par covalence, sur une surface polymère, une molécule comprenant un groupe fonctionnel réactif avec un carboxyle, comprenant les étapes consistant à:
(i) appliquer sur la surface un composé possédant au moins un groupe fonctionnel qui peut être converti en un groupe carboxylique;
(ii) traiter la surface avec un plasma pour immobiliser le composé; et
(iii) convertir le groupe fonctionnel en un groupe carboxylique; et
(iv) faire réagir la molécule avec le composé immobilisé sur la surface.
